# DEMANDE DE BREVET EUROPEEN

(11) **EP 0 930 206 A1**
(43) Date de publication de la demande: **21.07.1999**
(21) Numéro de dépôt: 98123488.3
(22) Date de dépôt: 14.12.1998
(51) Int. Cl.: B60S 1/34

(54) **Mécanisme d'entraînement en rotation d'un essuie-glace de véhicule automobile**

(30) Priorité: 15.12.1997 FR 9715983
(71) Demandeur: PAUL JOURNEE S.A., F-60240 Reilly (FR)
(72) Inventeur: Journee, Maurice,, 60240 Reilly (FR); Peigneguy, Stéphane,, 60240 Reilly (FR)
(74) Mandataire: Gamonal, Didier

(57) **Abrégé**

L'invention concerne un mécanisme du type comportant une tête d'entraînement (70) qui porte un bras d'essuie-glace (86) qui est monté articulé sur la tête d'entraînement (70, 74) autour d'un axe transversal d'articulation (E-E) sensiblement perpendiculaire à l'axe d'entraînement (B-B), et du type dans lequel, pour faire pivoter le bras d'essuie-glace autour d'un axe longitudinal de pivotement (D-D) sensiblement perpendiculaire aux axes d'entraînement (B-B) et d'articulation (E-E), la tête d'entraînement comporte une première partie menante (72) liée à l'arbre d'entraînement et une seconde partie menée (74) dont une portion d'extrémité arrière est montée pivotante par rapport à la partie menante (72) autour de l'axe longitudinal de pivotement (D-D), caractérisé en ce que l'axe de pivotement (D-D) est décalé transversalement par rapport à l'axe d'entraînement (B-B).

## Description

La présente invention concerne un mécanisme d'entraînement en rotation d'un essuie-glace appartenant à une installation d'essuie-glace de véhicule automobile.

L'invention concerne plus particulièrement un mécanisme d'entraînement d'un essuie-glace de véhicule automobile du type comportant une tête d'entraînement qui est entraînée en rotation, alternée entre deux positions angulaires extrêmes opposées d'inversion du sens de rotation, par un arbre moteur d'entraînement et qui porte un bras d'essuie-glace qui est monté articulé sur la tête d'entraînement autour d'un axe transversal d'articulation sensiblement perpendiculaire à l'axe vertical de rotation de l'arbre d'entraînement.

Le bras d'essuie-glace porte, à son extrémité libre, opposée à celle par laquelle il est articulé sur la tête d'entraînement, un balai d'essuie-glace qui porte une raclette d'essuyage dont la partie active est une lame longitudinale souple qui coopère avec la surface de la vitre à essuyer, notamment avec la surface du pare-brise.

Afin d'assurer un essuyage efficace de la vitre, tout en évitant les phénomènes de broutement générateurs de bruits nuisibles, il est souhaitable que la partie active de la lame d'essuyage, et notamment son bord d'attaque de la vitre, s'étende dans un plan faisant une inclinaison déterminée par rapport au plan général de la vitre à essuyer.

Du fait de l'inversion du sens de rotation à chacune des extrémités opposées du cycle de balayage alterné, il est nécessaire que l'angle déterminé d'inclinaison de la lame d'essuyage puisse s'inverser par rapport à un plan médian sensiblement perpendiculaire au plan de la vitre à essuyer.

Afin d'obtenir une telle inversion, il est connu de réaliser la raclette d'essuyage avec un talon supérieur porté par une structure articulée du balai d'essuie-glace et une lame inférieure d'essuyage qui est reliée au talon par une bande longitudinale mince formant charnière.

La capacité de déformation du film ou bande de liaison formant charnière pour permettre l'inversion de l'inclinaison de la partie active de la lame d'essuyage peut toutefois s'avérer insuffisante dans certaines applications et notamment lorsque l'effort d'essuyage appliqué à la raclette d'essuyage par l'intermédiaire de la structure articulée du balai et du bras d'essuie-glace est très importante.

Dans le même but, on connaît par ailleurs des moyens pour faire varier l'orientation de la lame en fonction de la position qu'occupe le bras d'essuie-glace par rapport au pare-brise le long de sa courbe de balayage alterné.

De tels moyens pour faire varier l'orientation de la lame sont en effet souhaitables notamment dans les cas où le pare-brise à essuyer possède un galbe important de façon à maintenir une orientation sensiblement constante du plan de la lame d'essuyage par rapport au plan de la portion de la vitre à essuyer afin que la position de la lame d'essuyage soit en permanence la plus proche possible de l'inclinaison optimale pour l'efficacité de l'essuyage.

A cet effet, il a déjà été proposé dans le document EP-A1-0.294.526 un mécanisme d'entraînement en rotation d'un essuie-glace du type dans lequel, pour faire pivoter le bras d'essuie-glace autour d'un axe longitudinal de pivotement sensiblement perpendiculaire aux axes d'entraînement de la tête d'entraînement et d'articulation du bras d'essuie-glace, la tête d'entraînement comporte :
- une première partie menante liée à l'arbre d'entraînement ; et
- une seconde partie menée dont une portion d'extrémité arrière est montée pivotante par rapport à la partie menante autour de l'axe longitudinal de pivotement du bras d'essuie-glace et dont une portion d'extrémité avant porte le bras d'essuie-glace à articulation autour de l'axe transversal d'articulation du bras.

Dans la conception proposée dans ce document, l'axe de pivotement est concourant avec l'axe de rotation de la partie menante de la tête d'entraînement et les moyens de commande du mouvement d'oscillation angulaire de la partie menante par rapport à la partie menée sont constitués par des dispositifs complexes du type à engrenages et/ou roue et vis sans fin qui assurent d'une part la commande de la variation de la position angulaire de la partie menée par rapport à la partie menante et, d'autre part, une liaison angulaire positive entre ces deux parties quel que soit le point de la course de balayage de l'essuie-glace.

Il en résulte une conception particulièrement encombrante de la tête d'entraînement et notamment une hauteur, mesurée parallèlement à l'axe d'entraînement en rotation de la tête, qui est très importante, cet encombrement empêchant l'adaptation de tels systèmes à certains essuie-glaces.

Cette adaptation est notamment impossible, outre les problèmes d'encombrement mentionnés précédemment, lorsque la tête d'entraînement est entraînée et guidée en rotation alternée par deux bielles dont l'une au moins est motrice, chacune des bielles étant articulée d'une part sur une partie fixe du véhicule et d'autre part sur la tête d'entraînement pour réaliser un mécanisme d'entraînement dit du type "à pantographe".

L'invention a ainsi pour objet de proposer un mécanisme d'entraînement perfectionné du type mentionné précédemment qui permet de résoudre les inconvénients qui viennent d'être évoqués et qui puisse être appliqué indifféremment à un essuie-glace d'entraînement classique par un arbre d'entraînement simple ou à un essuie-glace entraîné par un ensemble du type à pantographe.

Dans ce but, l'invention propose un mécanisme d'entraînement en rotation d'un essuie-glace de véhicule automobile, du type comportant une tête d'entraînement qui est entraînée en rotation, alternée entre deux positions angulaires extrêmes opposées d'inversion du sens de rotation, autour d'un axe d'entraînement, notamment par un arbre moteur d'entraînement et qui porte un bras d'essuie-glace qui est monté articulé sur la tête d'entraînementautour d'un axe transversal d'articulation sensiblement perpendiculaire à l'axe d'entraînement, et du type dans lequel, pour faire pivoter le bras d'essuie-glace autour d'un axe longitudinal de pivotement sensiblement perpendiculaire aux axes d'entraînement et d'articulation, la tête d'entraînement comporte :
- une première partie menante liée à l'arbre d'entraînement ; et
- une seconde partie menée dont une portion d'extrémité arrière est montée pivotante par rapport à la partie menante autour dudit axe longitudinal de pivotement et dont une portion d'extrémité avant porte le bras d'essuie-glaceà articulation autour dudit axe transversal d'articulation, caractérisé en ce que l'axe de pivotement est décalé transversalement par rapport à l'axe de rotation de l'arbre d'entraînement.

Selon d'autres caractéristiques de l'invention :
- la partie menée comporte une chape en U dont les branches parallèles d'orientation transversale entourent un talon de la partie menante, et en ce qu'une tige formant axe de pivotement traverse les branches et le talon
- les branches de la chape sont agencées de part et d'autre de l'axe d'entraînement ;
- la partie menée est susceptible de pivoter par rapport à la partie menante entre deux orientations extrêmes délimitées par des moyens mécaniques de butée intervenant entre ces deux parties :
- les moyens de butée sont agencés au voisinage de l'extrémité transversale de la partie menée qui, par rapport à l'axe d'entraînement, est opposée à l'axe de pivotement :
- les moyens de butée comportent une patte de butée qui s'étend, à partir de la partie menée ou de la partie menante, au voisinage de ladite extrémité transversale de la partie menée, et dont l'extrémité libre est susceptible de coopérer avec l'une ou l'autre de deux surfaces internes de butée opposées qui délimitent une cavité, formée dans la partie menante ou la partie menée respectivement, dans laquelle est reçue l'extrémité libre de la patte de butée :
- le mécanisme comporte des moyens bistables qui maintiennent la partie menée dans l'une ou l'autre desdites deux orientations extrêmes :
- les moyens bistables de maintien de la partie menée sont agencés au voisinage de l'extrémité transversale de la partie menée qui, par rapport à l'axe d'entraînement, est opposée à l'axe de pivotement :
- les moyens bistables de maintien interviennent entre la patte de butée et la cavité qui la reçoit ;
- les moyens bistables de maintien comportent un ressort à lame, à deux états stables opposés, interposé entre les parties menée et menante de la tête d'entraînement ;
- les moyens bistables de maintien comportent un amant, porté par la partie menante, ou la partie menée, qui coopère avec l'une ou l'autre de deux surfaces opposées de contact formées dans la partie menée, ou la partie menante respectivement ;
- les mouvements de pivotement de la partie menée sont commandés par un mécanisme à came(s) intervenant entre la partie menée et une pièce mobile en rotation, autour de l'axe d'entraînement, par rapport à la partie menée ;
- le mécanisme de commande à came(s) provoque le passage de l'une à l'autre des deux orientations extrêmes lorsque la tête d'entraînement atteint l'une ou l'autre des positions angulaires extrêmes opposées de la tête d'entraînement ;
- le mécanisme de commande à came(s) intervient entre la partie menée et une partie fixe du véhicule :
- la partie menante de la tête d'entraînement est entraînée et guidée en rotation alternée par deux belles dont l'une au moins est motrice, chacune des bielles étant articulée d'une part sur une partie fixe du véhicule et d'autre part sur la partie menante de la tête d'entraînement, et le mécanisme de commande à came(s) intervient entre la partie menée et l'une des bielles.

D'autres caractéristiques et avantages de l'invention apparaîtront à la lecture de la description détaillée qui suit pour la compréhension de laquelle on se reportera aux dessins annexés dans lesquels :
- la figure 1 est un schéma qui illustre un pare-brise de véhicule automobile en association avec deux mécanismes d'essuie-glace, respectivement côté conducteur et côté passager qui sont d'un type différent mais qui peuvent tous les deux être réalisés conformément aux enseignements de l'invention ;
- la figure 2 est une vue en perspective éclatée qui représente les principaux composants d'un premier mode de réalisation d'un mécanisme d'essuie-glace, côté passager, réalisé conformément aux enseignements de l'invention :
- la figure 3 est une vue en perspective de dessous de certains des composants de la figure 2 ;
- la figure 4 est une vue en perspective de dessous qui illustre les principaux composants du mécanisme assemblés et dans une position correspondant à celle de la figure 6 ;
- la figure 5 est une vue similaire à celle de la figure 4 sur laquelle les composants sont illustrés dans la position correspondant à celle de la figure 12 ;
- la figure 6 est une vue est une vue de dessus des principaux composants du mécanisme d'essuie-glace de la figure 1, en position assemblée, et qui sont représentés dans une première position relative correspondant à une première position angulaire extrême d'inversion du sens de rotation alternée et à une première orientation extrême de la partie menée par rapport à la partie menante ;
- la figure 7 est une vue de détail en section selon la ligne 7-7 de la figure 6 ;
- la figure 8 est une vue de détail en section selon la ligne 8-8 de la figure 6 ;
- les figures 9 à 11 sont des vues similaires à celles des figures 6 à 8 correspondant à l'approche de la seconde position angulaire extrême d'inversion du sens de rotation alternée et à à première orientation extrême de la partie menée par rapport à la partie menante ;
- les figures 12 à 14 sont des vues similaires à celles des figures 6 à 8 correspondant à la seconde position angulaire extrême d'inversion du sens de rotation alternée et à la seconde orientation extrême de la partie menée par rapport à la partie menante ;
- les figures 15 à 17 sont des vues similaires à celles des figures 6 à 8 correspondant à l'approche de la première position angulaire extrême d'inversion du sens de rotation alternée et à la seconde orientation extrême de la partie menée par rapport à la partie menante ;
- la figure 18 est une vue en perspective similaire à celle de la figure 2 qui illustre un deuxième mode de réalisation d'un mécanisme d'essuie-glace côté passager qui diffère du précédent par la conception des moyens bistables de maintien ;
- la figure 19 est une vue correspondant à celle de la figure 13 dans le cas du deuxième mode de réalisation ;
- la figure 20 est une vue latérale de droite de la figure 19 ;
- la figure 21 est une vue correspondant à celle de la figure 7 ;
- la figure 22 est une vue latérale de droite de la figure 21 ;
- la figure 23 est une vue en perspective éclatée des principaux composants d'un troisième mode de réalisation d'un mécanisme d'essuie-glace conforme aux enseignements de l'invention et qui est ici du type à balayage circulaire ;

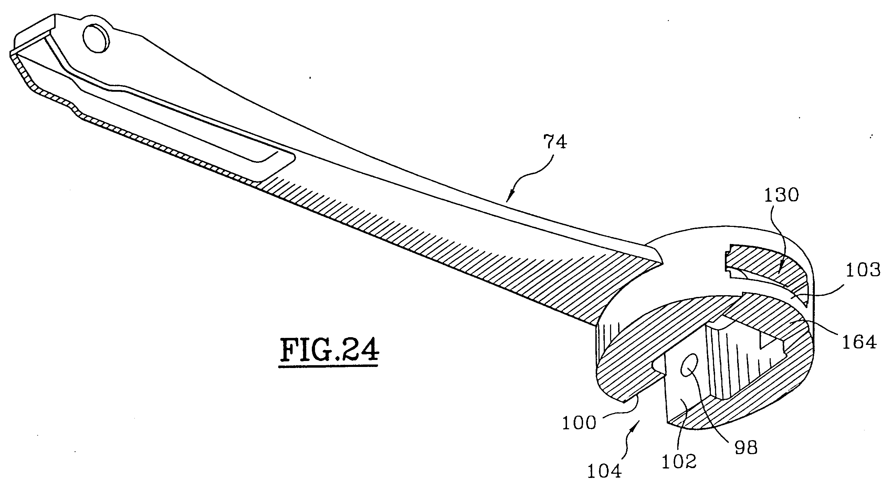

- la figure 24 est une vue en perspective à plus grande échelle et selon un autre angle de la partie menée de la tête d'entraînement du bras d'essuie-glace de la figure précédente ;
- la figure 25 est une vue en section partielle par un plan horizontal, selon la ligne 25-25 de la figure 26 sur laquelle les composants sont illustrés en position assemblée ;
- les figures 26 et 27 sont des vues en section selon la ligne 26-26 de la figure précédente qui illustrent les deux orientations extrêmes opposées de la partie menée par rapport à la partie menante de la tête d'entraînement ;
- la figure 28 est une vue de dessus et à plus grande échelle de la double came fixe du mécanisme de commande à cames des mouvements de pivotement de la partie menée ;
- la figure 29 est une vue schématique de dessus qui illustre les positions relatives des principaux composants dans une première position angulaire de la tête d'entraînement qui correspond à la position angulaire de la figure 6 ;
- la figure 30 est une vue en section partielle selon la ligne 30-30 de la figure 29 ;

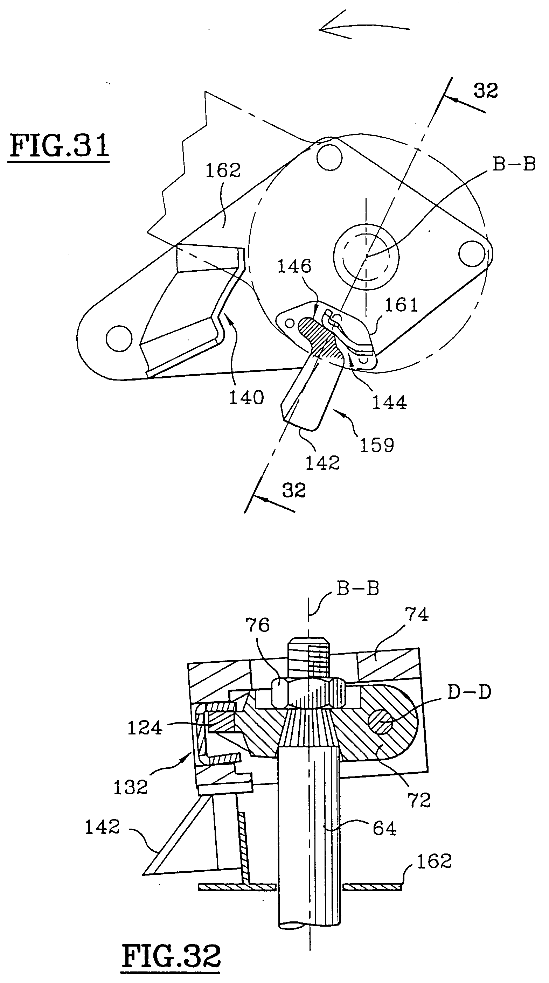

- les figures 31-32, 33-34 et 35-36 sont trois séries de deux vues similaires à celles des figures 29 et 30 qui correspondent aux trois positions angulaires des figures 9, 12 et 15 ;
- la figure 37 est une vue partielle en perspective éclatée d'un quatrième mode de réalisation de l'invention pour un essuie-glace à balayage circulaire du type de celui représenté aux figures 23 à 36 et qui diffère du précédent par la conception des moyens de butée et de maintien qui sont du type à ressort bistable ;
- la figure 38 est en section horizontale une vue similaire à celle de la figure 25 ;
- les figures 39 et 41 sont des vues similaires à celles des figures 26 et 27 et les figures 40 et 42 sont des vues latérales de gauche des figures 39 et 41 respectivement.

Dans la description qui va suivre, des éléments identiques, similaires analogues ou équivalents sont désignés par les mêmes chiffres de référence et les termes horizontal, vertical, avant, arrière, etc. ne sont utilisés que pour faciliter les explications, notamment en référence aux figures.

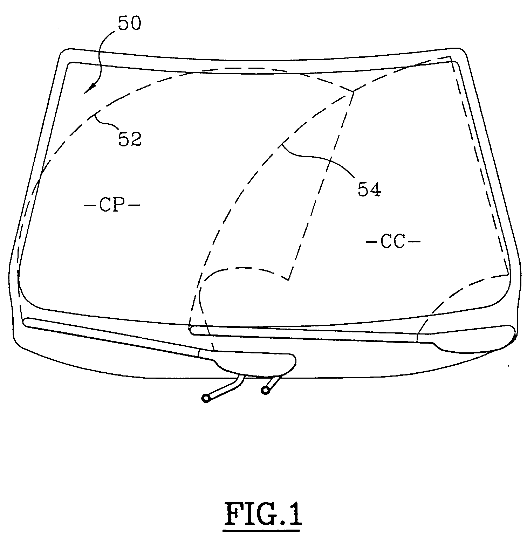

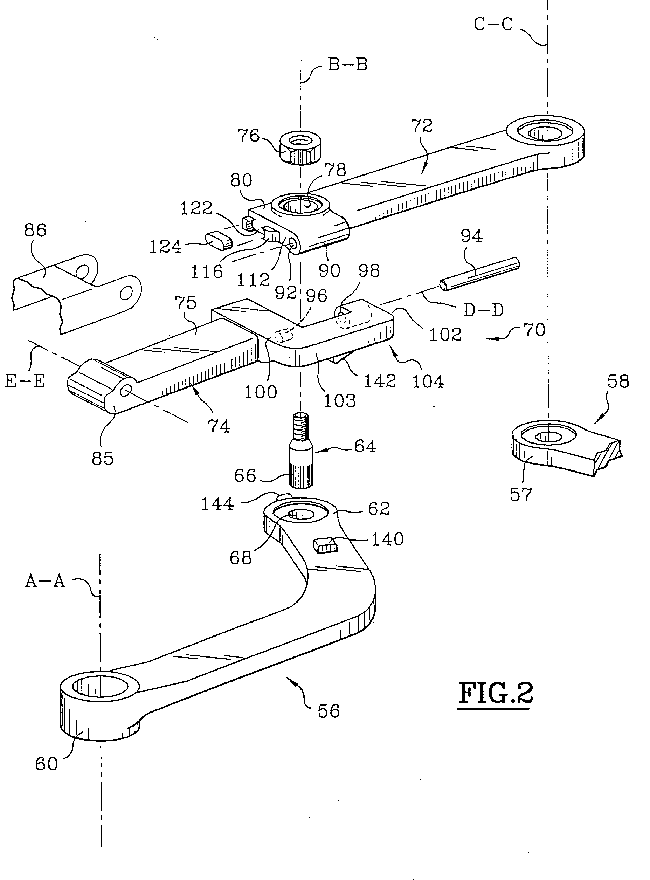

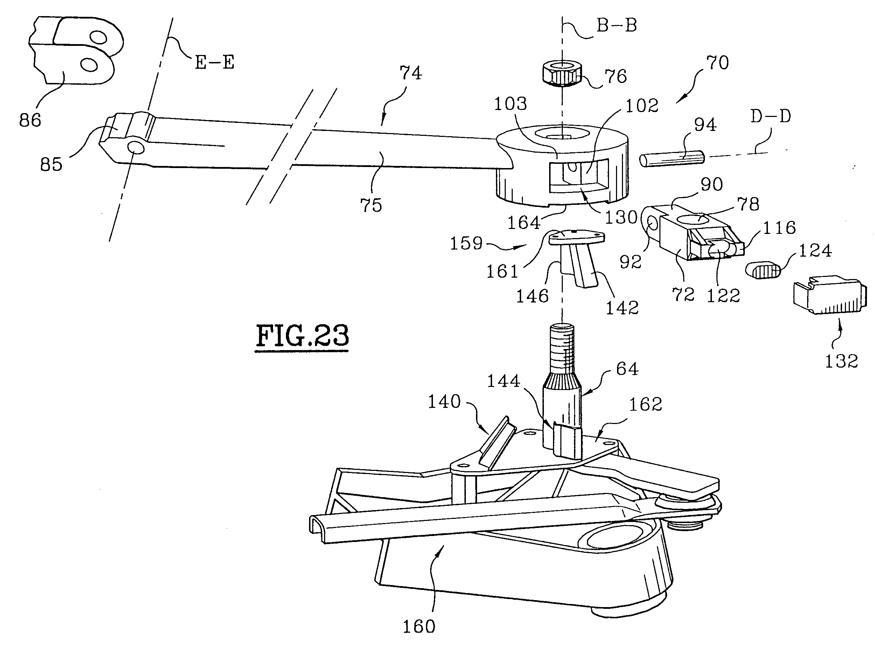

On a représenté sur la figure 1, de manière schématique, un pare-brise 50 de véhicule automobile dont la surface 52 peut être balayée du côté conducteur CC par un essuie-glace à mouvement circulaire, par exemple du type de celui illustré à la figure 23, centré autour d'un axe fixe de balayage et, du côté passager CP, par un essuie-glace à mouvement non circulaire à pantographe, par exemple du type de celui illustré à la figure 2, qui balaye une zone 54 qui recouvre partiellement la zone 52, les deux zones de balayage 52 et 54 correspondant à une partie de la surface vitrée supérieure à 90% de cette dernière.

L'essuie-glace à pantographe qui est notamment illustré à la figure 2 comporte, selon une conception connue, deux bielles parallèles 56 et 58 dont chacune est montée articulée par rapport à une partie fixe du véhicule et dont l'une est motrice, ici par exemple la bielle 56.

A cet effet, la première extrémité 60 de la bielle 56 est entraînée en rotation alternée autour d'un axe de rotation A-A par une timonerie, non représentée, et sa seconde extrémité 62 porte un arbre d'entraînement 64 dont l'extrémité inférieure 66 est sertie dans un trou 68 et qui s'étend selon un axe vertical B-B parallèle à l'axe A-A.

Selon une conception connue, l'arbre 64 entraîne une tête d'entraînement 70 qui comporte une partie menante 72 et une partie menée 74. L'arbre 64 est monté serré, par un écrou 76, dans une douille de palier, non représentée en détail, qui est montée dans un trou 78 de la partie avant 80 de la partie menante 72 par rapport à laquelle l'arbre 64 est ainsi monté à rotation autour de l'axe d'entraînement B-B.

De la même manière, selon une conception connue et non représentée, la seconde extrémité 57 de la belle arrière 56 est montée à rotation par rapport à la partie arrière de la partie menante 72 autour d'un axe vertical C-C parallèle aux axes A-A et B-B.

La partie menante 72, avec les belles 56 et 58, se déplace ainsi globalement dans un plan, dit ici horizontal, qui est globalement parallèle au plan moyen du pare-brise à essuyer.

Conformément aux enseignements de l'invention, et selon une conception qui sera décrite plus en détail par la suite, la partie arrière de la partie menée 74 de la tête d'entraînement 70 est montée pivotante par rapport à la partie menante 72 autour d'un axe longitudinal de pivotement D-D qui est sensiblement perpendiculaire à l'axe d'entraînement A-A et qui est décalé transversalement par rapport à ce dernier, c'est à dire que les axes A-A et D-D ne sont pas concourants.

La partie avant 85 de la partie menée 74 porte, de manière connue en soi, l'extrémité arrière d'un bras d'essuie-glace 86 qui est ainsi articulé sur la tête d'entraînement 70 autour d'un axe transversal d'articulation E-E qui est perpendiculaire à la direction générale longitudinale du bras d'essuie-glace et qui est sensiblement perpendiculaire à l'axe d'entraînement A-A.

Le bras d'essuie-glace 86 est ainsi globalement monté pivotant par rapport à la tête d'entraînement 70 autour de l'axe D-D de manière à pouvoir faire varier l'orientation de la lame d'essuyage, non représentée, de la raclette d'essuyage portée par le bras d'essuie-glace.

Le montage pivotant de la partie menée 74 sur la partie menante 72 est réalisé par l'intermédiaire d'un montage en chape.

A cet effet, dans l'exemple représenté sur les figures, la partie avant 80 de la partie menante 72 comporte un talon latéral 90 qui s'étend transversalement dans le plan général de la partie menante 72 et qui comporte un perçage 92 destiné à recevoir à rotation une tige 94 dont les deux extrémités longitudinales opposées sont respectivement reçues, par exemple par emmanchement à force, dans deux trous alignés 96 et 98 qui appartiennent respectivement aux branches parallèles avant 100 et arrière 102 d'une chape en U 104 formée à la partie arrière de la partie menée 74.

Les branches 100 et 102 entourent le talon latéral 90 et l'épaisseur verticale de la chape 104, c'est à dire de ses deux branches transversales parallèles 100 et 102 et de sa branche centrale longitudinale 103, est sensiblement égale à l'épaisseur du talon latéral 90 et de la partie menante 72 de la tête d'entraînement 70 de manière que l'ensemble de la tête d'entraînement 70 soit d'une épaisseur ou hauteur réduite.

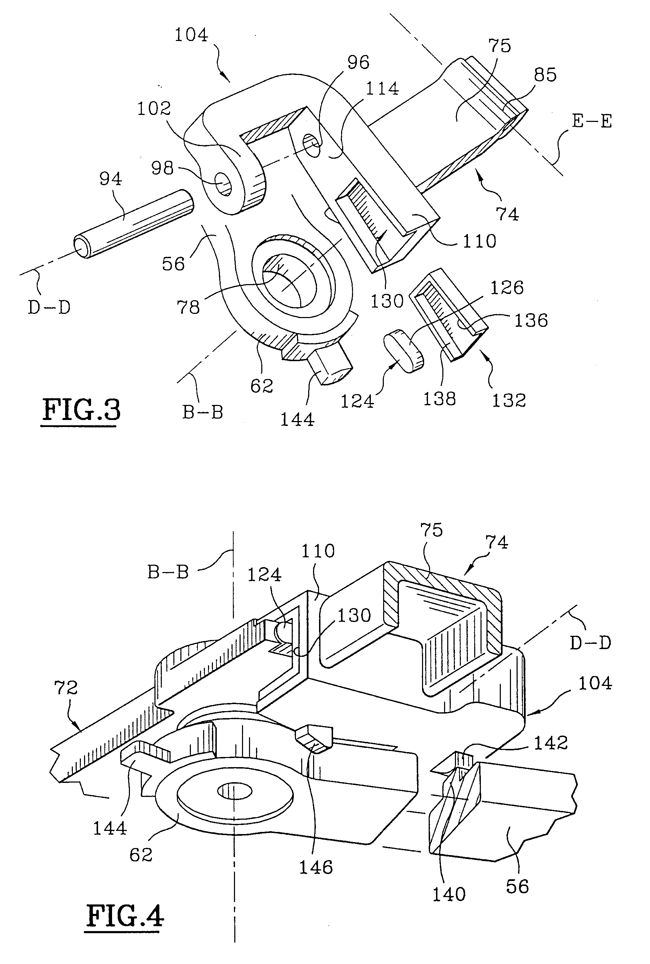

La branche avant 100 est plus longue que la branche arrière 102 de manière à constituer une portion 110 (voir figures 3 et 4) d'orientation transversale qui relie la chape 104 au corps 75 de la partie menée 74 et qui s'étend en regard de la face transversale d'extrémité avant 112 de la partie menante 72 avec un léger jeu longitudinal entre la face avant 112 et la face transversale arrière 114 de la portion 110.

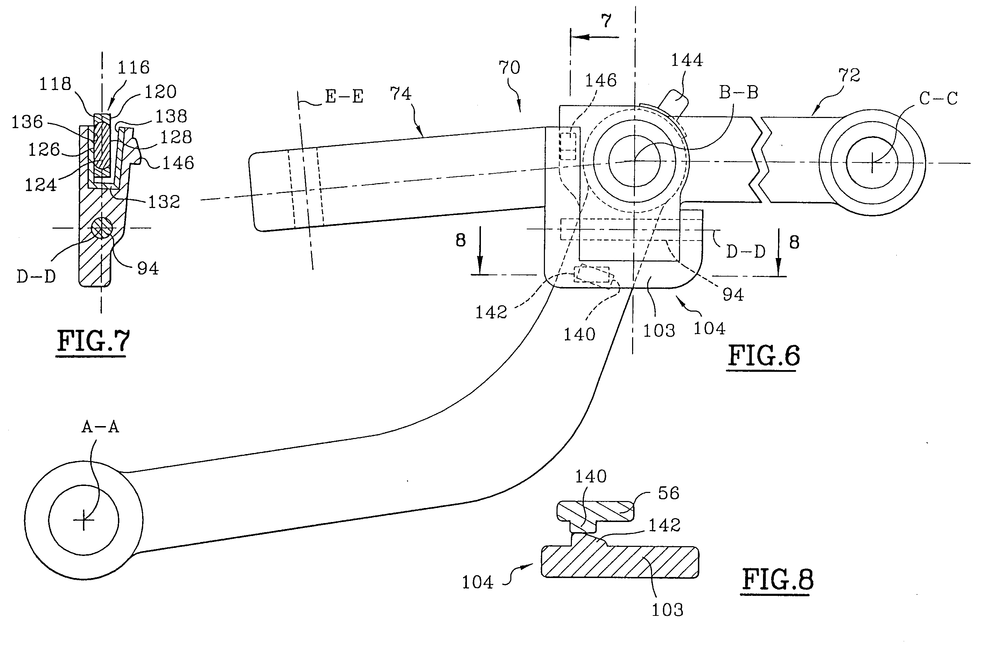

La partie avant 80 de la partie menante 72 se prolonge longitudinalement vers l'avant au delà de la face 112 par une patte de butée 116 qui est délimitée verticalement par deux facettes parallèles supérieure 118 et inférieure 120 (voir figure 7) et qui comporte en son centre un logement 122 ouvert vers l'avant qui reçoit un amant 124 dont les deux faces parallèles supérieure 126 et inférieure 128 sont en affleurement avec les facettes 118 et 120.

La patte de butée 116 est reçue longitudinalement et avec jeu dans une cavité 130 formée dans la face d'extrémité arrière 114 de la portion 110 qui est ouverte dans la face 114.

La cavité 130 reçoit une cage d'habillage 132, de forme complémentaire de celle de la cavité 130 et d'épaisseur réduite, qui est réalisée par exemple en matériau ferreux de manière à permettre, quel que soit le matériau de moulage de la partie menée 74, une coopération par aimantation entre les faces 126 et 128 de l'aimant 124 et les surfaces internes opposées supérieure 136 et inférieure 138 de la cage 132 pour constituer les moyens magnétiques bistables de maintien de la partie menée 74 par rapport à la partie menante 72 au sens de l'invention.

Les surfaces 136 et 138 forment entre elles un angle aigu qui est ici égal à environ 8°.

Les faces 136 et 138 délimitent la cavité dans laquelle est reçue la patte de butée 116 et qui constituent aussi deux surfaces de butée 136 et 138 avec lesquelles sont susceptibles de coopérer les facettes 118 et 120 pour imiter les mouvements de pivotement relatif de la partie menée 74 par rapport à la partie menante 72 en déterminant notamment ainsi les deux orientations extrêmes, autour de l'axe longitudinal de pivotement D-D, de la partie menée 74 par rapport à la partie menante 72.

Les moyens de butée 118, 120 et 136, 138 sont, comme on peut le voir notamment à la figure 7, agencés globalement de manière opposée à l'axe de pivotement D-D par rapport à l'axe d'entraînement A-A de façon à disposer de moyens d'articulation et de butée d'un encombrement particulièrement réduit.

On décrira maintenant les moyens de commande des mouvements de pivotement relatif de la partie menée 74 par rapport à la partie menante 72 qui sont ici constitués par un mécanisme à cames intervenant entre la partie menée 74 et la partie menante 72.

Dans la mesure où il est nécessaire de provoquer un changement d'orientation à chacune des deux fins de course opposées du balayage alterné provoqué par la belle motrice 56, le mécanisme à cames comporte deux paires de cames associées 140-142 et 144-146 qui interviennent respectivement dans une première et dans une seconde positions angulaires relatives de la bielle motrice 56 par rapport à la tête d'entraînement 70, et plus précisément par rapport à la partie menée 74.

La première paire de cames, que l'on peut notamment voir illustrée en détail aux figures 2, 4, 8 et 17 comporte une première came 140 portée par la face supérieure de la bielle motrice 56 et une seconde came 142 agencée sous la face inférieure de la branche centrale longitudinale 103 de la chape en U 104.

Les deux cames sont agencées sur une même circonférence autour de l'axe d'entraînement B-B de manière à pouvoir coopérer, cette coopération étant facilitée du fait de la rampe inclinée constituée sur la seconde came 142.

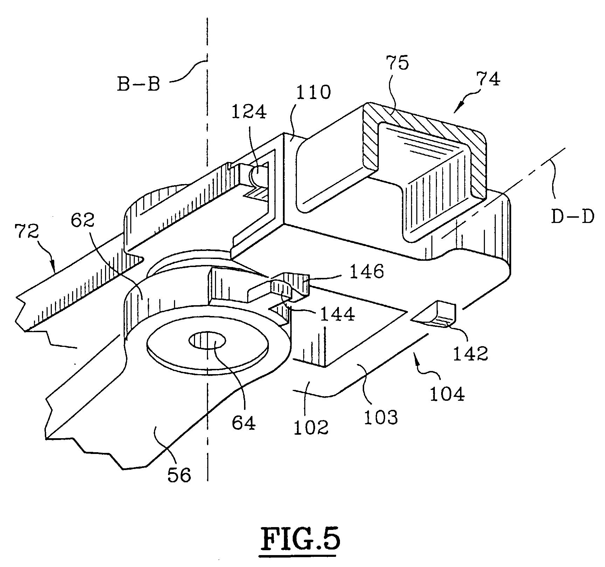

La seconde paire de cames, que l'on peut notamment voir illustrée en détail aux figures 4, 5, 10 et 13 comporte une première came 144 portée par l'extrémité libre 62 de la belle motrice 56 qui porte l'arbre d'entraînement 64 et une seconde came 146 agencée sous la face inférieure de la portion 110 de la branche transversale avant 100 de la chape en U 104.

Les deux cames sont agencées sur une même circonférence autour de l'axe d'entraînement B-B de manière à pouvoir coopérer, cette coopération étant facilitée du fait de la rampe inclinée constituée sur la seconde came 146.

On décrira maintenant le mode de fonctionnement de la tête d'entraînement 70 en deux parties en partant de la première position illustrée aux figures 6 à 8.

Dans cette première position angulaire extrême d'inversion du sens de balayage, la tête d'entraînement 70 est dans une position angulaire extrême par rapport à la bielle motrice 56.

Par définition, et pour simplifier les explications, on supposera que la partie menante 72 est fixe en considérant les figures et que c'est la bielle motrice 56 qui est mobile en rotation, autour de l'axe d'entraînement B-B, par rapport à la partie menante 72.

Dans cette première position, les deux cames 140 et 142 de la première paire de cames coopèrent entre elles et la partie menée 74 est dans une première orientation extrême par rapport à la partie menante 72, c'est à dire que la facette supérieure 118 de la patte de butée 116 et la face supérieure 126 de l'aimant 124 sont en butée et en contact avec la surface interne supérieure 136 de la cage 132 définissant ainsi une première orientation extrême de la partie menée 74 qui correspond à une première inclinaison extrême de la lame de la raclette d'essuyage.

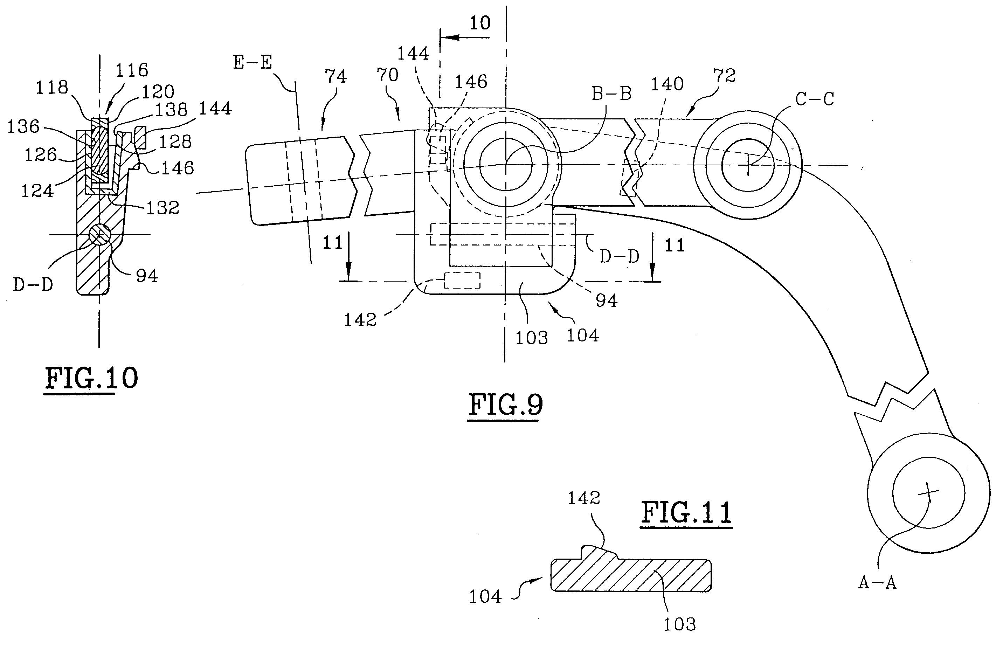

En partant de cette première position, la bielle tourne dans le sens anti-horaire pour atteindre la deuxième position illustrée aux figures 9 à 11. Au cours de cette rotation, et du fait de la coopération de l'amant 124 avec la surface 136, la partie menée 74 conserve sa première orientation extrême par rapport à la partie menante 72

Dans la deuxième position angulaire, qui est ici décalée d'environ 120° par rapport à la première position de la figure 6, la première came 144 de la seconde paire de cames accoste la seconde came 146.

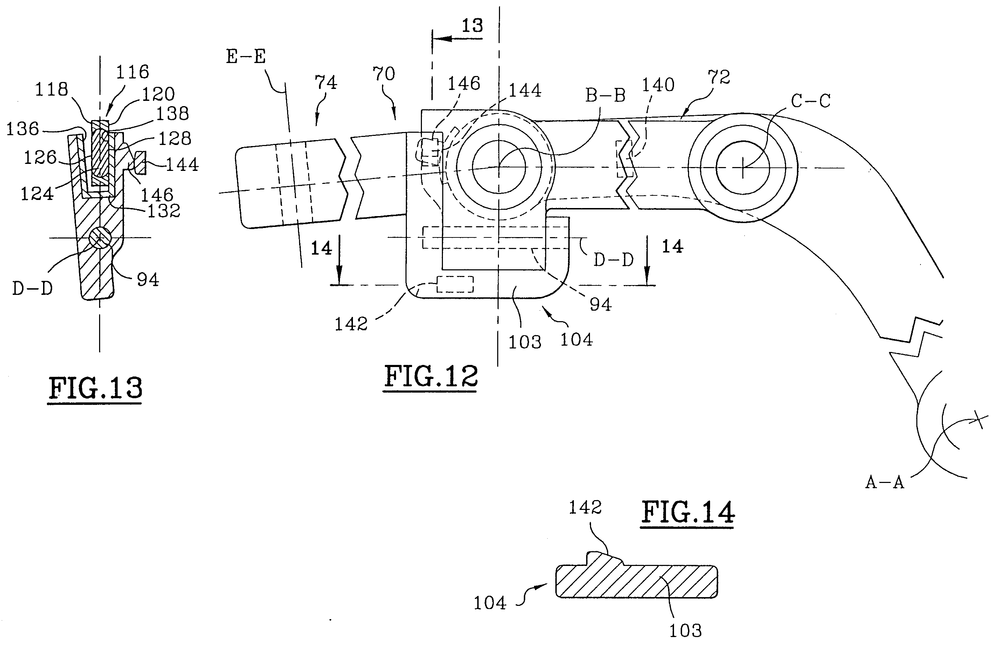

La rotation de la bielle motrice 56 se poursuit alors, toujours dans le sens anti-horaire pour atteindre la troisième position angulaire illustrée aux figures 12 à 14 qui correspond à la seconde position angulaire extrême d'inversion du sens de balayage. et qui est décalée angulairement d'environ 10° par rapport à la position de la figure 9.

Au cours de cette rotation de 10°, les deux cames de la seconde paire de cames 144-146 coopèrent ensemble et elles provoquent le pivotement, autour de l'axe longitudinal D-D, de la partie menée 74 par rapport à la partie menante 72 d'un angle d'environ 8°, dans le sens anti-horaire en considérant les figures 10 puis 13 pour atteindre la seconde orientation extrême de la partie menée 74 dans laquelle la facette inférieure 120 de la patte de butée 116 et la face inférieure 128 de l'aimant 124 sont en butée et en contact de la surface interne inférieure 138 de la cage 132.

Le basculement de la partie menée 74, de sa première vers sa seconde orientation extrême, est confirmé par l'aimant 124 qui fait office de mécanisme bistable qui maintient la partie menée 74 dans l'une ou l'autre de ces deux orientations.

Le basculement total de 8° correspond ainsi à une inclinaison d'environ 4° du bras d'essuie-glace par rapport à une orientation médiane dans laquelle le plan de la lame d'essuyage est sensiblement perpendiculaire au plan moyen du pare-brise.

Au-delà de la troisième position angulaire illustrée à la figure 12, le sens de balayage s'inverse et la bielle motrice 56 tourne alors dans le sens horaire par rapport à la tête d'entraînement 70.

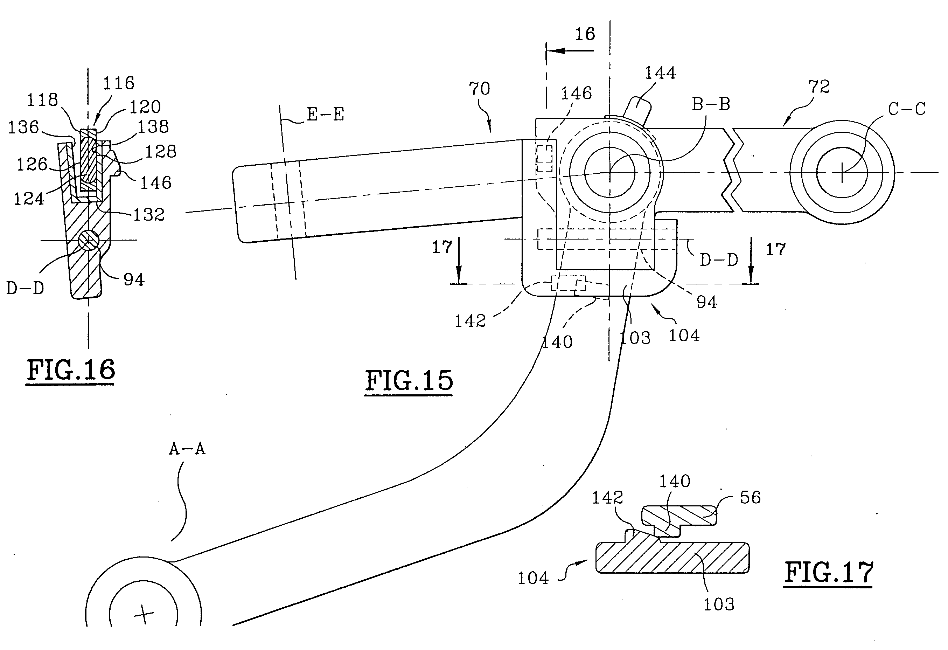

Sans que l'orientation de la partie menée 74 par rapport à la partie menante 72 ne soit modifiée, la bielle tourne alors jusqu'à atteindre la quatrième position angulaire illustrée aux figures 15 à 17, décalée d'environ 120° par rapport à la position précédente, dans laquelle la première came 140 de la première paire de cames accoste la seconde came 142.

Au-delà de cette quatrième position, la rotation de la bielle motrice 56 se poursuit, sur environ 10°, pour atteindre à nouveau la première position illustrée à la figure 6.

Au cours de cette rotation de 10°, les deux cames de la première paire de cames 140-142 coopèrent ensemble et elles provoquent le pivotement, autour de l'axe longitudinal D-D, de la partie menée 74 par rapport à la partie menante 72 d'un angle d'environ 8°, dans le sens horaire en considérant les figures 16 puis 6, pour atteindre la première orientation extrême de la partie menée 74 dans laquelle la facette supérieure 118 de la patte de butée 116 et la face supérieure 126 de l'aimant 124 sont à nouveau en butée et en contact avec la surface interne supérieure 136 de la cage 132.

Le mouvement de balayage alterné se poursuit ensuite selon le cycle qui vient d'être décrit à partir de la position de la figure 6.

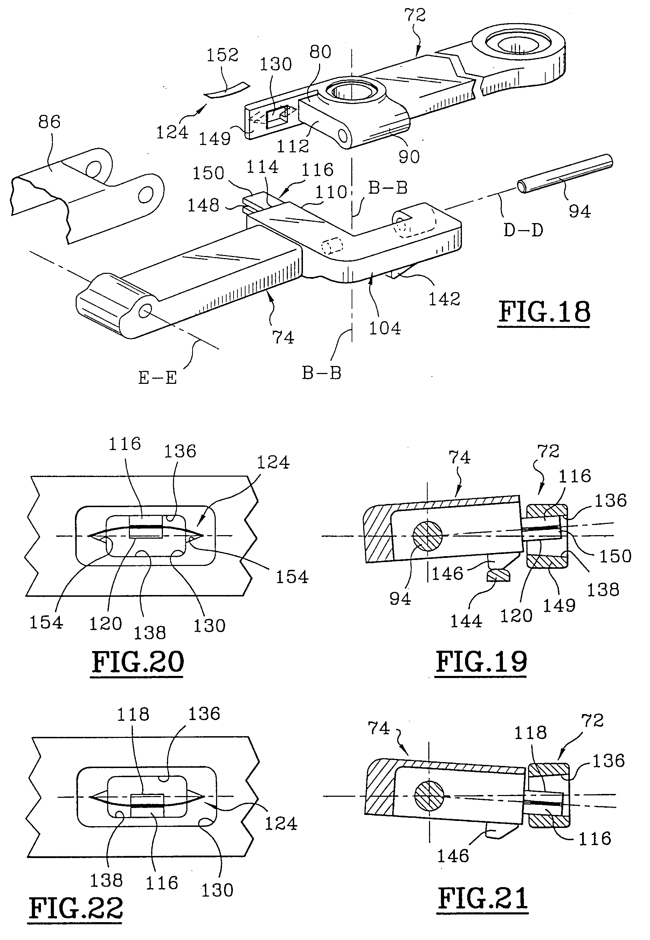

On décrira maintenant le deuxième mode de réalisation illustré aux figures 18 à 22 pour lequel on décrira essentiellement les différences par rapport au précédent mode de réalisation.

Comme on peut le voir sur ces figures, ce second mode de réalisation se caractérise essentiellement par la conception des moyens de butée qui définissent les deux orientations extrêmes de la partie menée 74 par rapport à la partie menante 72 et par la conception des moyens bistables de maintien dans l'une ou l'autre de ces deux positions.

La patte de butée 116 s'étend ici à partir de la face transversale 114 d'extrémité libre de la portion 110 de la branche transversale avant 100 de la chape en U 104, et elle est reçue avec jeu entre les bords longitudinaux internes supérieur 136 et inférieur 138 d'une cavité 130 qui est ici une fenêtre formée dans une plaque longitudinale 149 qui prolonge la partie d'extrémité avant 80 de la partie menante 72 au delà de sa face transversale d'extrémité avant 112 et qui s'étend, avec jeu, en regard de la face transversale 114.

La patte de butée 116 comporte une fente horizontale 148 qui débouche dans sa face d'extrémité libre transversale 150 et qui reçoit la partie centrale 152 d'un ressort à lame bistable 124 dont les extrémités longitudinales opposées sont emboîtées dans deux logements 154 en V formés dans les bords verticaux opposés de la fenêtre 130, le ressort occupant l'un ou l'autre de deux états stables illustrés aux figures 20 et 22.

Le fonctionnement de ce deuxième mode réalisation est identique à celui du premier mode de réalisation, notamment en ce qui concerne l'intervention des moyens de commande par cames 140-142 et 144-146 des mouvements de pivotement de la partie menée 74 par rapport à la partie menante 72.

Comme on peut le voir aux figures 19 à 22, les deux orientations extrêmes opposées de la partie menée 74, qui sont ici aussi décalées l'une par rapport à l'autre d'environ 8°, sont déterminées par la venue en butée de la facette supérieure 118 de la patte de butée 116 contre le bord interne supérieur 136 de la fenêtre 130 ou, inversement, par la venue en butée de la facette inférieure 120 de la patte de butée 116 contre le bord interne inférieur 138 de la fenêtre 130.

On décrira maintenant les troisième et quatrième modes de réalisation illustrés à partir de la figure 23 qui concernent tous les deux la mise en oeuvre du concept inventif selon l'invention appliqué à un bras (classique) à balayage circulaire agencé côté conducteur CC.

Dans le cas d'un tel bras classique, l'arbre d'entraînement 64, d'axe vertical B-B, est entraîné en rotation alternée par une timonerie 160 qui est illustrée à la figure 23 en association avec certains composants fixes de la structure du véhicule dont une platine inférieure 162 qui est traversée à rotation par l'arbre d'entraînement 64.

L'extrémité supérieure de l'arbre 64 est tronconique et cannelée, selon une conception connue, de manière à entraîner en rotation la partie menante 72 de la tête d'entraînement 70 en deux parties, cette partie menante 72 comportant un trou 78 complémentaire de la partie cannelée sur laquelle elle est serrée par l'écrou 76.

Comme on peut le voir notamment aux figures 23 et 25 à 27, la partie menante est un bloc massif de forme générale parallélépipédique dont une extrémité transversale, par rapport à l'axe B-B de l'arbre d'entraînement 64, est constituée en un talon 90 traversé par la tige 94 permettant le montage pivotant de la partie menée 74 sur la partie menante 72.

A l'opposé du talon 90, par rapport à l'axe B-B, la partie menante 72 comporte une patte de butée 116 avec un logement 122 pour l'amant 124, la conception de cette patte 116 étant globalement identique à celle décrite et représentée en référence au premier mode de réalisation de l'essuie-glace à pantographe.

La partie menée 74 reçoit à son extrémité avant 85 la partie arrière d'un bras d'essuie-glace 86, de conception classique, articulé autour de l'axe E-E, tandis que sa partie arrière massive est une partie creuse conformée en une chape 104 en U à deux branches avant 100 et arrière 102, d'orientation transversale, qui sont reliées entre elles par une branche longitudinale 103 dans laquelle est formée la cavité 130 qui reçoit la cage 132 en matériau ferreux prévue pour coopérer avec l'aimant 124 porté par la partie menante 72.

Ainsi, comme dans le cas des deux premiers modes de réalisation, la partie menée 74 est globalement montée pivotante par rapport à la partie menante 72 autour d'un axe de pivotement D-D qui n'est pas concourant avec l'axe B-B et qui est décalé transversalement par rapport à celui-ci.

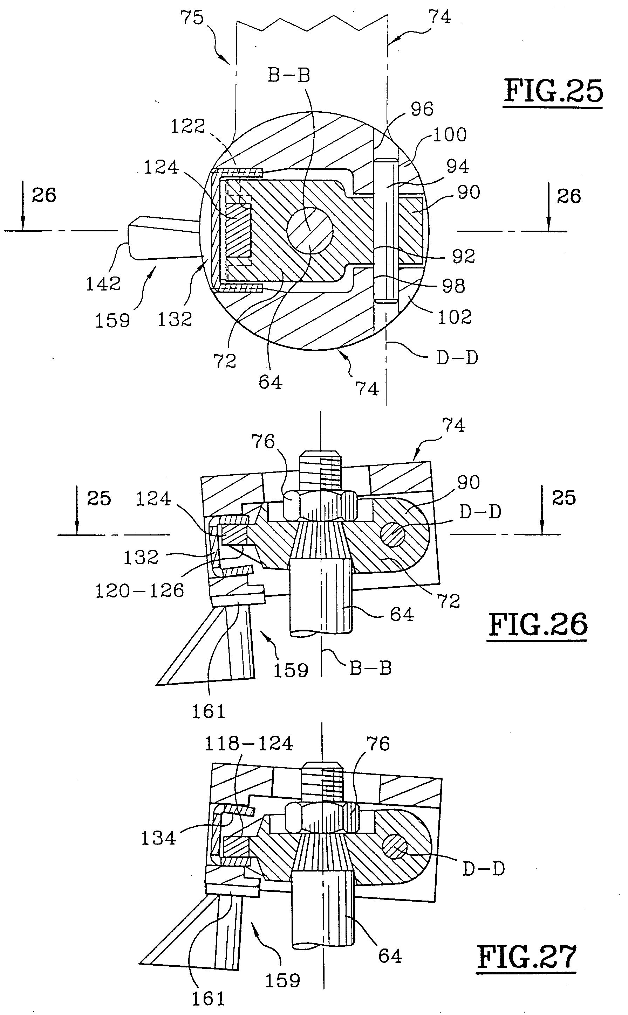

Les moyens de butée qui délimitent les deux orientations extrêmes de la partie menée 74 par rapport à la partie menante 72, qui sont illustrées aux figures 26 et 27, ainsi que des moyens magnétiques bistables de maintien dans l'une ou l'autre de ces deux orientations extrêmes, sont de conception globalement similaire à celle qui fait l'objet du premier mode de réalisation et leurs intervention et fonctionnement ne seront pas décrits plus en détail.

Les moyens de commande des mouvements de pivotement de la partie menée 74 autour de l'axe de pivotement D-D sont ici aussi des moyens de commande par cames qui interviennent cette fois-ci entre la partie menée 74 de la tête d'entraînement 70 et une partie fixe du véhicule, en l'occurrence ici la platine 162.

L'ensemble de cames mobiles 142 et 146 est réalisé sous la forme d'une pièce unique 159 qui comporte une plaque supérieure 161 de fixation de cette pièce 159 sous la face inférieure 164 de la branche longitudinale 103 de la chape 104.

A partir de la plaque 161, les deux cames 142 et 146 s'étendent globalement verticalement vers le bas et de manière inclinée avec des profils particuliers destinés à coopérer avec des profils complémentaires de deux cames fixes 140 et 144 qui sont toutes les deux portées par la face supérieure de la platine 162 et qui s'étendent globalement verticalement vers le haut.

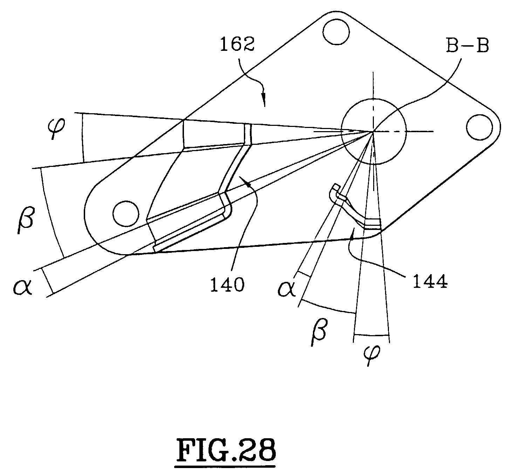

Comme on peut le voir notamment sur la figure 28, chacune des deux cames fixes 140 et 144 comporte un premier tronçon d'entrée qui s'étend sur un angle α, puis un tronçon intermédiaire qui s'étend sur un angle β, et enfin un tronçon final qui s'étend sur un angle ϕ.

Le mode d'intervention des deux paires de cames associées 140-142 et 144-146 est globalement le même que celui décrit précédemment en référence aux deux premiers modes de réalisation.

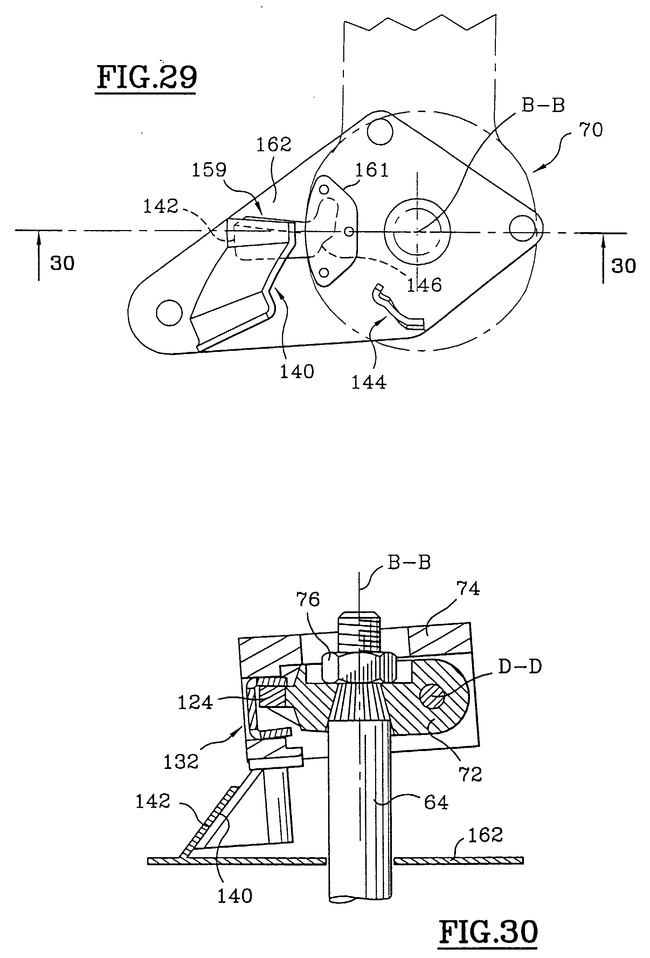

Dans la première position illustrée aux figures 29 et 30, la came mobile 142 coopère avec le troisième tronçon (ϕ) de la came fixe 140 qui détermine d'orientation de la partie menée 74, par rapport à la partie menante 72 qui est illustrée à la figure 30.

A partir de la position illustrée à la figure 29, en considérant la rotation de la tête d'entraînement 70 dans le sens horaire, l'orientation de la partie menée 74 demeure inchangée et la came mobile 146 accoste le premier tronçon (α) de la came fixe 144.

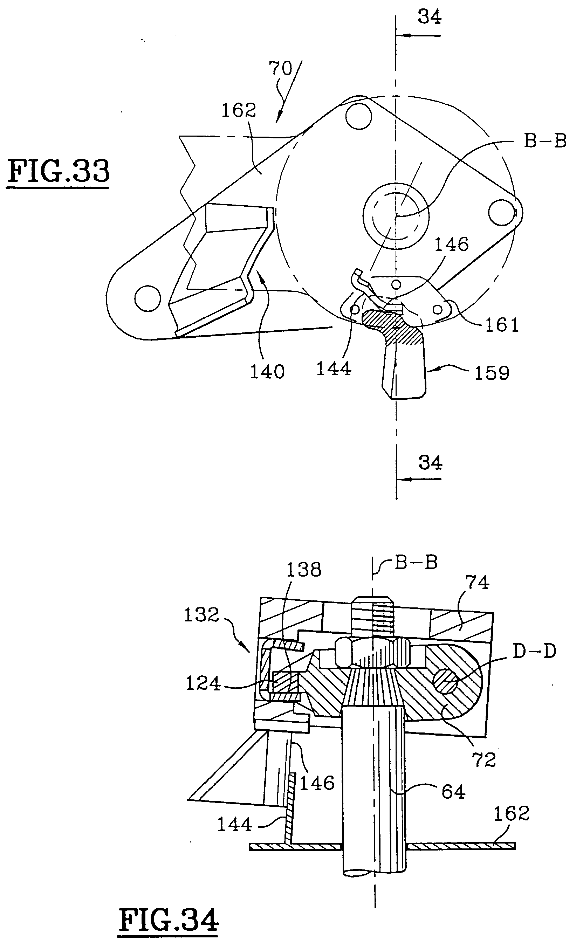

En poursuivant la course dans le sens horaire, on atteint la position illustrée aux figures 33 et 34 dans laquelle la tête d'entraînement 70 a atteint son autre position extrême d'inversion du sens de balayage et dans laquelle la coopération de la came mobile 146 avec la came fixe 144 le long des deux tronçons suivants (β et ϕ) a provoqué le basculement en pivotement de la partie menée 74 par rapport à la partie menante 72 (dans le horaire autour de l'axe D-D en considérant les figures) pour que cette dernière atteigne sa seconde orientation angulaire maximale délimitée par la venue en butée de l'élément 124 avec la surface interne inférieure 138 de la cage 132.

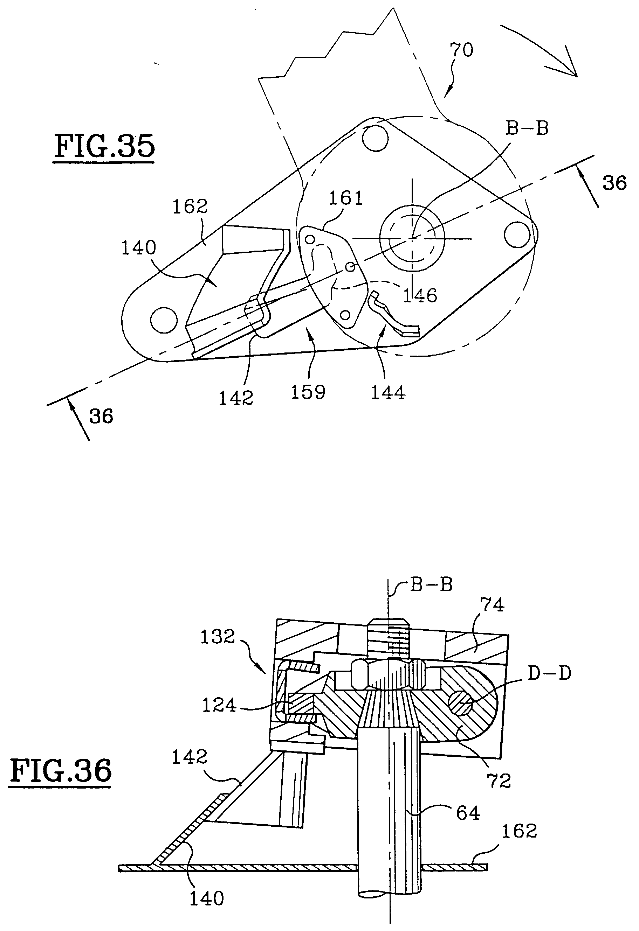

A partir de la position illustrée à la figure 33, le sens de rotation s'inverse pour atteindre la position illustrée à la figure 35, après une rotation de la tête d'entraînement 70 dans le sens horaire, l'orientation extrême de la partie menée 74 par rapport à la partie menante 72 restant inchangée dans la mesure où la coopération de la came mobile 142 avec le premier tronçon (α) de la came fixe 40 ne provoque le basculement du pivotement autour de l'axe D-D.

A partir de la position illustrée aux figures 35 et 36, le mouvement de rotation de la tête d'entraînement 70 dans le sens horaire se poursuit pour atteindre à nouveau la position angulaire extrême d'inversion du sens de balayage illustré aux figures 29 et 30, le basculement de pivotement de la partie menée 74 par rapport à la partie menante 72 étant provoqué à nouveau du fait de la coopération de la came mobile 142 successivement avec les deuxième et troisième tronçons (β et ϕ) de la came fixe 140.

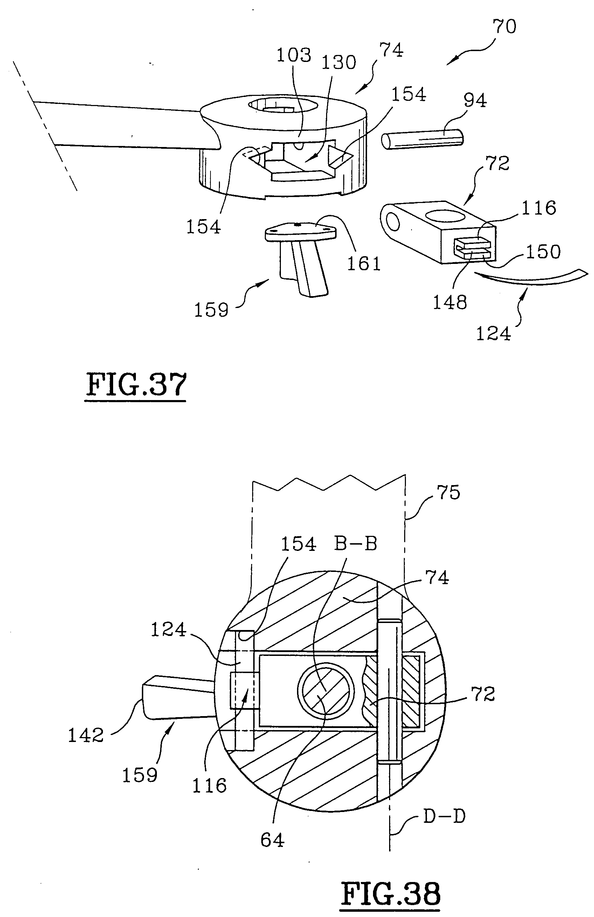

On décrira maintenant le quatrième et dernier mode de réalisation illustré aux figures 37 à 42.

La conception de ce quatrième mode de réalisation est globalement identique à celle du troisième mode de réalisation, notamment en ce qui concerne les moyens de commande par cames des mouvements de pivotement de la partie menée 74 par rapport à la partie menante 72.

Comme dans le cas du deuxième mode de réalisation, les moyens bistables de maintien de la partie menée 74 dans l'une ou l'autre de ces deux orientations extrêmes par rapport à la partie menante 72 sont constitués par un ressort bistable 124 qui est monté dans des logements en V 154 formés dans les bords verticaux de la fenêtre 130 de la branche latérale 103.

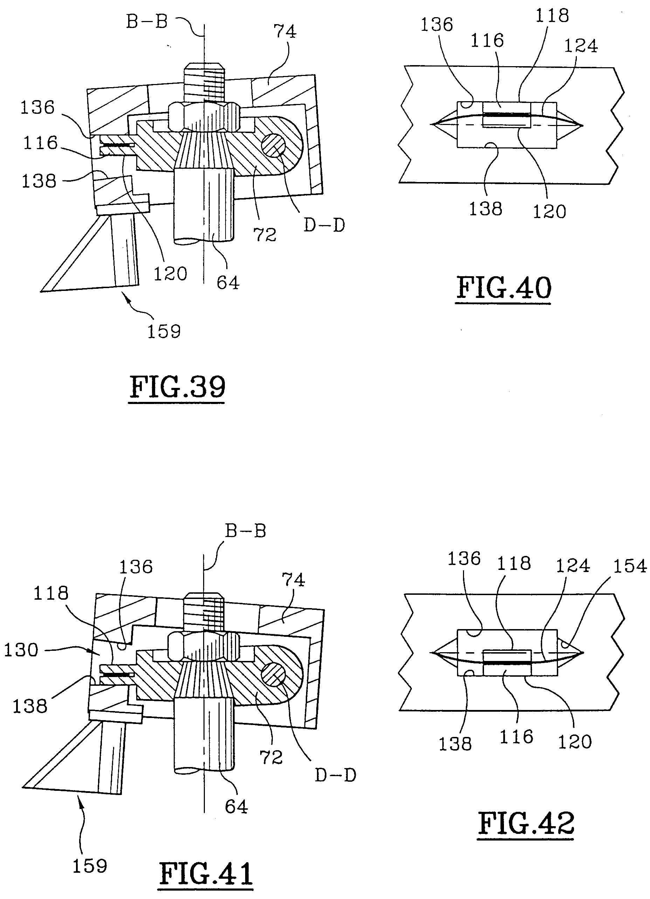

Le mode de fonctionnement de ce quatrième mode de réalisation, dont certaines positions relatives des composants sont illustrées aux figures 39 à 42, est en tous points identique à celui décrit précédemment en référence au troisième mode de réalisation, l'intervention du ressort bistable 124 étant équivalente à celle décrite en référence au deuxième mode de réalisation.

## Revendications

1. Mécanisme d'entraînement en rotation d'un essuie-glace de véhicule automobile,
du type comportant une tête d'entraînement (70) qui est entraînée en rotation, alternée entre deux positions angulaires extrêmes opposées d'inversion du sens de rotation, autour d'un axe d'entraînement (B-B), notamment par un arbre moteur d'entraînement (64) et qui porte un bras d'essuie-glace (86) qui est monté articulé sur la tête d'entraînement (70, 74) autour d'un axe transversal d'articulation (E-E) sensiblement perpendiculaire à l'axe d'entraînement (B-B),
et du type dans lequel, pour faire pivoter le bras d'essuie-glace autour d'un axe longitudinal de pivotement (D-D) sensiblement perpendiculaire aux axes d'entraînement (B-B) et d'articulation (E-E), la tête d'entraînement comporte :
- une première partie menante (72) liée à l'arbre d'entraînement : et
- une seconde partie menée (74) dont une portion d'extrémité arrière est montée pivotante par rapport à la partie menante (72) autour dudit axe longitudinal de pivotement (D-D) et dont une portion d'extrémité avant (85) porte le bras d'essuie-glace (86) à articulation autour dudit axe transversal d'articulation (E-E),
caractérisé en ce que l'axe de pivotement (D-D) est décalé transversalement par rapport à l'axe d'entraînement (B-B).

2. Mécanisme d'entraînement en rotation d'un essuie-glace selon la revendication 1, caractérisé en ce que la partie menée comporte une chape en U (104) dont les branches parallèles (100, 102) d'orientation transversale entourent un talon (90) de la partie menante (72), et en ce qu'une tige (94) formant axe de pivotement traverse les branches (100, 102) et le talon (90).

3. Mécanisme d'entraînement en rotation d'un essuie-glace selon la revendication 2, caractérisé en ce que les branches (100, 102) de la chape (104) sont agencées de part et d'autre de l'axe d'entraînement (94).

4. Mécanisme d'entraînement en rotation d'un essuie-glace selon l'une quelconque des revendications précédentes, caractérisé en ce que la partie menée (74) est susceptible de pivoter par rapport à la partie menante (72) entre deux orientations extrêmes délimitées par des moyens mécaniques de butée (116, 130) intervenant entre ces deux parties (72, 74).

5. Mécanisme d'entraînement en rotation d'un essuie-glace selon la revendication 4, caractérisé en ce que les moyens de butée sont agencés au voisinage de l'extrémité transversale de la partie menée (74, 110) qui, par rapport à l'axe d'entraînement (B-B), est opposée à l'axe de pivotement (D-D).

6. Mécanisme d'entraînement en rotation d'un essuie-glace selon l'une des revendications 4 ou 5, caractérisé en ce que les moyens de butée comportent une patte de butée (116) qui s'étend, à partir de la partie menée (74) ou de la partie menante (72), au voisinage de ladite extrémité transversale de la partie menée, et dont l'extrémité libre est susceptible de coopérer avec l'une ou l'autre de deux surfaces internes de butée opposées (136, 138) qui délimitent une cavité (130), formée dans la partie menante (72) ou la partie menée (74) respectivement, dans laquelle est reçue l'extrémité libre de la patte de butée (116).

7. Mécanisme d'entraînement en rotation d'un essuie-glace selon l'une quelconque des revendications 4 à 6, caractérisé en ce qu'il comporte des moyens bistables (124) qui maintiennent la partie menée (74) dans l'une ou l'autre desdites deux orientations extrêmes.

8. Mécanisme d'entraînement en rotation d'un essuie-glace selon la revendication 7, caractérisé en ce que les moyens bistables (124) de maintien de la partie menée sont agencés au voisinage de l'extrémité transversale de la partie menée (74, 110) qui, par rapport à l'axe d'entraînement (B-B), est opposée à l'axe de pivotement (D-D).

9. Mécanisme d'entraînement en rotation d'un essuie-glace selon la revendication 8 prise en combinaison avec la revendication 6, caractérisé en ce que les moyens bistables de maintien (124) interviennent entre ladite patte de butée (116) et la cavité (130) qui la reçoit.

10. Mécanisme d'entraînement en rotation d'un essuie-glace selon l'une quelconque des revendications 7 à 9, caractérisé en ce que les moyens bistables de maintien comportent un ressort à lame (124), à deux états stables opposés, interposé entre les parties menée (74) et menante (72) de la tête d'entraînement (70).

11. Mécanisme d'entraînement en rotation d'un essuie-glace selon l'une quelconque des revendications 7 à 9, caractérisé en ce que les moyens bistables de maintien comportent un aimant (124), porté par la partie menante (72), ou la partie menée (74), qui coopère avec l'une ou l'autre de deux surfaces opposées de contact (136, 138) formées dans la partie menée (74), ou la partie menante (72).

12. Mécanisme d'entraînement en rotation d'un essuie-glace selon l'une quelconque des revendications précédentes, caractérisé en ce que les mouvements de pivotement de la partie menée (74) sont commandés par un mécanisme à came(s) (140, 142, 144, 146) intervenant entre la partie menée (74) et une pièce mobile en rotation (56, 162), autour de l'axe d'entraînement (B-B), par rapport à la partie menée (74).

13. Mécanisme d'entraînement en rotation d'un essuie-glace selon la revendication 12, caractérisé en ce que le mécanisme de commande à came(s) provoque le passage de l'une à l'autre des deux orientations extrêmes lorsque la tête d'entraînement (70) atteint l'une ou l'autre des positions angulaires extrêmes opposées de la tête d'entraînement.

14. Essuie glace selon l'une des revendications 12 ou 13, caractérisé en ce que le mécanisme de commande à came(s) intervient entre la partie menée (74) et une partie fixe (162) du véhicule.

15. Essuie glace, selon l'une des revendications 12 ou 13, caractérisé en ce que la partie menante (72) de la tête d'entraînement est entraînée et guidée en rotation alternée par deux belles dont l'une au moins est motrice, chacune des bielles (56, 58) étant articulée d'une part sur une partie fixe du véhicule et d'autre part sur la partie menante (72) de la tête d'entraînement, caractérisé en ce que le mécanisme de commande à came(s) intervient entre la partie menée (74) et l'une (56) des bielles.
